Europäisches Patentamt

European Patent Office

Office européen des brevets

(11) Numéro de publication: **0 308 281 B1**

(12) **FASCICULE DE BREVET EUROPEEN**

(45) Date de publication de fascicule du brevet: **09.12.92**  (51) Int. Cl.⁵: **G02B 6/42**, G02B 6/38, G02B 6/28

(21) Numéro de dépôt: **88402076.9**

(22) Date de dépôt: **10.08.88**

(54) Dispositif d'alignement d'éléments optiques, procédé de fabrication de ce dispositif et procédés de raccordement de deux fibres optiques, et d'une diode photoémettrice à une fibre optique, utilisant le dispositif.

(30) Priorité: **13.08.87 FR 8711540**

(43) Date de publication de la demande:
**22.03.89 Bulletin 89/12**

(45) Mention de la délivrance du brevet:
**09.12.92 Bulletin 92/50**

(84) Etats contractants désignés:
**CH DE GB LI**

(56) Documents cités:
**EP-A- 0 018 768**     **WO-A-86/07163**
**DE-A- 2 636 997**     **DE-A- 2 853 800**
**FR-A- 2 548 390**     **US-A- 4 431 260**

**PATENT ABSTRACTS OF JAPAN, vol. 10, no. 68 (P-437)[2125], 18 mars 1986, page 48; & JP-A-60 207 104**

**PATENT ABSTRACTS OF JAPAN, vol. 10, no. 60 (P-435)[2117], 11 mars 1986, page 48; & JP-A-60 202 408**

(73) Titulaire: **FRANCE TELECOM**
**6, Place d'Alleray**
**F-75015 Paris(FR)**

(72) Inventeur: **Le Marer, René**
**Kerougan Bras**
**F-22730 Tregastel(FR)**
Inventeur: **Grosso, Philippe**
**route de Trébeurden Servel**
**F-22300 Lannion(FR)**

(74) Mandataire: **Mongrédien, André et al**
**c/o BREVATOME 25, rue de Ponthieu**
**F-75008 Paris(FR)**

# Description

La présente invention concerne un dispositif d'alignement d'éléments optiques, un procédé de fabrication de ce dispositif et des procédés de raccordement de deux fibres optiques, et d'une diode photoémettrice à une fibre optique, utilisant le dispositif.

Par "alignement d'éléments optiques", on entend notamment l'alignement de deux fibres optiques, ou d'une fibre optique et d'un dispositif photoémetteur ou encore d'une fibre optique et d'un dispositif photodétecteur.

La présente invention s'applique notamment au raccordement d'une fibre optique à une autre ou à une source lumineuse ou à un photodétecteur, les fibres étant par exemple monomodes, la source lumineuse étant par exemple une diode laser, ou encore à la fabrication d'un coupleur optique en X à partir de deux fibres optiques par exemple monomodes.

On connaît déjà un dispositif d'alignement d'éléments optiques, qui comprend un ensemble réalisé à partir de platines micrométriques et permettant de déplacer un vé de positionnement de fibre optique suivant deux directions X et Y perpendiculaires, ainsi qu'un autre ensemble comprenant un moyen piézoélectrique capable de se déformer suivant les directions X et Y et une autre direction Z perpendiculaire à X et à Y, ce moyen étant monté sur un assemblage de platines micrométriques permettant des déplacements suivant les directions X et Y. Un autre vé de positionnement de fibre optique est monté sur le moyen piézoélectrique en regard du premier vé.

Ce dispositif connu est sujet à des dilatations thermiques différentielles compte tenu des différents matériaux (céramique, métal, ...) dont sont faits les éléments qui constituent ce dispositif. De ce fait et compte tenu de sa structure asymétrique, ce dispositif est instable dans le temps et ne permet pas d'obtenir une reproductibilité de positionnement des vés en l'absence d'excitation du moyen piézoélectrique. Il est donc nécessaire, pour aligner deux fibres optiques au moyen de ce dispositif connu, de régler préalablement les platines micrométriques en vue de pouvoir faire passer une certaine quantité de lumière d'une fibre à l'autre, en l'absence d'excitation du moyen piézoélectrique, afin de pouvoir effectuer ensuite le réglage final d'alignement à l'aide de ce moyen. De tels inconvénients sont manifestes notamment lorsqu'on cherche à raccorder, au moyen de ce dispositif connu, deux fibres optiques monomodes, dont les coeurs ont un très petit diamètre, de l'ordre de quelques micromètres, ou une fibre monomode et une diode laser de très faible surface émettrice.

La présente invention a pour but de remédier aux inconvénients précédents.

On connaît déjà, par le document DE-A-2 853 800, un coupleur pour fibres optiques et, par le document FR-A-2 548 390, un dispositif de déplacement de l'extrémité d'une fibre optique. On connaît aussi, par le document Patent Abstracts of Japan, vol.10, n°68, (P-347), (JP-A-60 207 104), un dispositif correspondant au préambule de la revendication 1.

L'invention a pour objet un dispositif d'alignement mutuel de deux éléments optiques, conformément à la revendication 1.

Le dispositif objet de l'invention, qui ne comporte aucune platine micrométrique, est plus simple que le dispositif connu, comportant des platines micrométriques et mentionné plus haut.

En outre, du fait de l'identité des deux ensembles qu'il comprend, le dispositif objet de l'invention permet une bonne reproductibilité de positionnement des supports de réception qu'il comporte, en l'absence d'excitation des blocs piézoélectriques.

Ces supports de réception sont par exemple des vés de positionnement pour fibres optiques et le dispositif objet de l'invention permet donc d'obtenir un bon alignement de ces vés au repos, c'est-à-dire lorsque les blocs piézoélectriques ne sont pas excités électriquement.

De ce fait, l'invention permet d'éviter tout prépositionnement mécanique - en l'absence d'excitation des blocs piézoélectriques - de deux fibres optiques à aligner. Avant le réglage d'alignement, effectué au moyen des blocs piézoélectriques, les fibres étant placées dans les vés de positionnement avec des extrémités respectives en regard l'une de l'autre, il est toujours possible, grâce à l'invention, de récupérer une certaine quantité de lumière en l'autre extrémité de l'une des fibres lorsque de la lumière est injectée dans l'autre extrémité de l'autre fibre et ce, même pour des fibres monomodes.

Selon un mode de réalisation particulier du dispositif objet de l'invention, dans chaque ensemble, le second élément rigide repose sur ledit même support.

Selon un mode de réalisation préféré du dispositif objet de l'invention, le second élément rigide repose sur ledit même support par l'intermédiaire d'une face sur laquelle est ménagé un évidement.

On diminue ainsi les frottements entre le second élément rigide et le support, frottements qui sont néfastes au bon fonctionnement du dispositif objet de l'invention.

De préférence, ledit même support et les éléments rigides sont fait d'un même matériau.

De préférence également, ledit matériau est le verre, matériau dont la dilatation thermique est négligeable. Ce matériau est par exemple la silice.

2

Dans une réalisation particulière de l'invention, les supports de réception sont deux vés identiques, respectivement fixés aux seconds blocs piézoélectriques parallèlement à une direction perpendiculaire aux directions X et Y et de telle manière que ces vés soient alignés lorsque les blocs piézoélectriques ne sont pas excités électriquement, ces vés étant destinés à recevoir respectivement deux éléments optiques dont le pourtour est prévu à cet effet.

Les vés peuvent être avantageusement faits du même matériau (de préférence le verre) que le support et les éléments rigides.

De préférence, afin d'obtenir des déformations (contractions ou dilations) d'amplitude suffisante pour les blocs piézoélectriques (ce qui peut être nécessaire pour l'alignement de fibres optiques par exemple), chacun de ces blocs comprend un empilement de plusieurs plaques piézoélectriques agencées de façon à permettre une contraction ou une dilatation globale du bloc.

Selon une réalisation particulière des blocs, chaque plaque comporte deux faces opposées rendues électriquement conductrices, l'empilement des plaques est réalisé de façon que deux plaques adjacentes de cet empilement aient une face en commun, la face en commun de deux plaques adjacentes, ces deux plaques formant un couple, est électriquement reliée à la face en commun correspondant à un couple adjacent de plaques, et les polarisations respectives des plaques sont alternées.

La présente invention concerne également un procédé de fabrication d'un dispositif d'alignement d'éléments optiques, comprenant les étapes successives suivantes :
- on réalise un premier et un second blocs piézoélectriques ayant chacun deux faces d'extrémité, chaque bloc ayant un plan de symétrie partageant ce bloc en deux parties identiques, ce bloc comprenant un empilement de plusieurs plaques piézoélectriques suivant une direction donnée, parallèle au plan de symétrie, cet empilement faisant apparaître deux faces d'extrémité pour le bloc, les plaques étant agencées de façon à permettre une contraction ou une dilatation globale du bloc et des parties identiques lorsqu'elles sont séparées, suivant la direction donnée,
- on fixe un premier élément rigide admettant un plan de symétrie, à l'une des faces d'extrémité du premier bloc piézoélectrique et de manière que le plan de symétrie de ce dernier soit confondu avec le plan de symétrie du premier élément rigide,
- on fixe un second élément rigide admettant un plan de symétrie, à l'autre face d'extrémité de ce premier bloc et de manière que le plan de symétrie de ce dernier soit confondu avec le plan de symétrie du second élément rigide,
- on fixe l'une des faces d'extrémité du second bloc piézoélectrique au second élément rigide de telle manière que les directions respectivement relatives aux blocs piézoélectriques soient perpendiculaires et que les plans de symétrie du second bloc piézoélectrique et du second élément rigide soient confondus,
- on fixe un support de réception apte à recevoir les éléments optiques et admettant un plan de symétrie sur l'autre face d'extrémité du second bloc piézoélectrique et de manière que le plan de symétrie de ce dernier soit confondu avec le plan de symétrie du support de réception,
- on fixe le premier élément rigide sur un support, de telle façon que le second élément rigide repose contre ce support, et
- l'on effectue une coupure (de préférence un sciage), suivant les plans de symétrie confondus, de l'ensemble comprenant les deux blocs piézoélectriques, les deux éléments rigides et le support de réception, en entamant le support, de préférence légèrement.

Selon un mode de mise en oeuvre préféré de ce procédé, chaque bloc piézoélectrique est obtenu par empilement de plaques piézoélectriques identiques, comportant deux faces opposées rendues électriquement conductrices et possédant un premier et un second plans de symétrie perpendiculaires l'un à l'autre ainsi qu'aux faces opposées, en alternant les polarisations respectives des plaques et en faisant passer :
- de part et d'autre du premier plan de symétrie, deux conducteurs électriques minces et continus, sensiblement parallèles, entre les plaques de rang $2n$ et $2n+1$ dans l'empilement, $n$ étant un nombre entier au moins égal à un, et de façon que, observés suivant le second plan de symétrie, ces conducteurs forment respectivement sensiblement des créneaux décalés d'une demi-période de créneau l'un par rapport à l'autre, et
- de part et d'autre du second plan de symétrie, deux conducteurs électriques minces et continus, sensiblement parallèles, entre les plaques de rang $2n-1$ et $2n$ dans l'empilement, et de façon que, observées suivant le premier plan de symétrie, ces conducteurs forment respectivement sensiblement des créneaux décalés d'une demi-période de créneau l'un par rapport à l'autre.

Selon un autre mode de mise en oeuvre préféré, chaque bloc piézoélectrique est obtenu par empilement de plaques piézoélectriques identiques, comportant deux faces opposées rendues électriquement conductrices et possédant un premier et un second plans de symétrie perpendiculaires l'un à l'autre ainsi qu'aux faces opposées, en alternant les polarisations respectives des plaques et en faisant passer :

- de part et d'autre du premier plan de symétrie deux conducteurs électriques minces et continus, sensiblement parallèles, entre les plaques de rang 2n et 2n + 1 dans l'empilement pour l'un des deux conducteurs, et de rang 2n-1 et 2n pour l'autre conducteur, n étant un nombre entier au moins égal à un, et de façon que, observés suivant le second plan de symétrie, ces conducteurs forment respectivement sensiblement des créneaux décalés d'un quart de période de créneau l'un par rapport à l'autre, et

- de part et d'autre du second plan de symétrie, deux conducteurs électriques minces et continus, sensiblement parallèles, entre les plaques de rang 2n et 2n + 1 dans l'empilement pour l'un des deux conducteurs, et de rang 2n-1 et 2n pour l'autre conducteur, et de façon que observés suivant le premier plan de symétrie, ces conducteurs forment respectivement sensiblement des créneaux décalés d'un quart de période de créneau l'un par rapport à l'autre.

Ces deux modes de réalisation préférés sont avantageux du fait qu'ils permettent tous deux d'effectuer une coupure du bloc ainsi obtenu suivant l'un ou l'autre des deux plans de symétrie perpendiculaires, sans avoir à se demander, comme on pourrait avoir à le faire dans d'autres modes de réalisation des blocs, imaginables par l'homme du métier, suivant quel plan la coupure doit être faite.

La présente invention concerne également un procédé de raccordement de deux fibres optiques, conforme à la revendication 13.

De préférence, préalablement à sa disposition dans le vé qui lui correspond, chaque fibre est privée de gaine protectrice sur une portion s'étendant à partir de ladite extrémité, cette portion est fixée dans un embout cylindrique de révolution, les extrémités associées de l'embout et de la fibre sont ensuite polies perpendiculairement à l'axe de l'embout, et ces embouts sont reliés par un joint de colle photopolymérisable, cette colle étant polymérisée après avoir respectivement disposé les embouts dans les vés et rendu maximale la quantité de lumière détectée à l'autre extrémité de l'autre fibre.

Il est en effet plus simple de raccorder les fibres munies de leurs embouts cylindriques au moyen d'une colle photopolymérisable que de raccorder deux fibres sans embouts, par soudure (ce qui n'est toutefois pas exclu dans l'invention).

La présente invention concerne aussi un procédé de raccordement d'une fibre optique à une diode photoémettrice ayant une surface photoémissive, ce procédé étant conforme à la revendication 15.

Enfin, la présente invention concerne également un procédé de raccordement de deux fibres optiques en vue d'obtenir un coupleur optique en X, ce procédé étant conforme à la revendication 16.

La présente invention sera mieux comprise à la lecture de la description qui suit, d'exemples de réalisation donnés à titre purement indicatif et nullement limitatif, en référence aux dessins annexés, sur lesquels :

- la figure 1 représente une plaque piézoélectrique qui se contracte ou se dilate suivant le sens du champ électrique qui lui est appliqué,

- la figure 2 est une vue schématique d'un mode de réalisation particulier du dispositif objet de l'invention, permettant le raccordement de deux fibres optiques,

- la figure 3 est une vue schématique d'un bloc piézoélectrique permettant de réaliser le dispositif représenté sur la figure 2,

- la figure 4 est une vue schématique de ce bloc coupé en deux parties identiques en vue de la réalisation du dispositif en question,

- la figure 5 est une vue schématique d'une variante de réalisation du bloc piézoélectrique (représenté coupé en deux parties identiques),

- la figure 6 illustre schématiquement les connexions électriques présentes dans les moitiés de bloc représentées sur les figures 4 et 5,

- la figure 7 est une vue schématique d'un mode de réalisation particulier du dispositif objet de l'invention, permettant de raccorder une diode photoémettrice, du type diode laser, à une fibre optique,

- la figure 8 est une vue schématique d'un autre mode de réalisation particulier du dispositif objet de l'invention, permettant la réalisation d'un coupleur optique en X à partir de deux fibres optiques, et

- la figure 9 illustre schématiquement la préparation de ces fibres optiques.

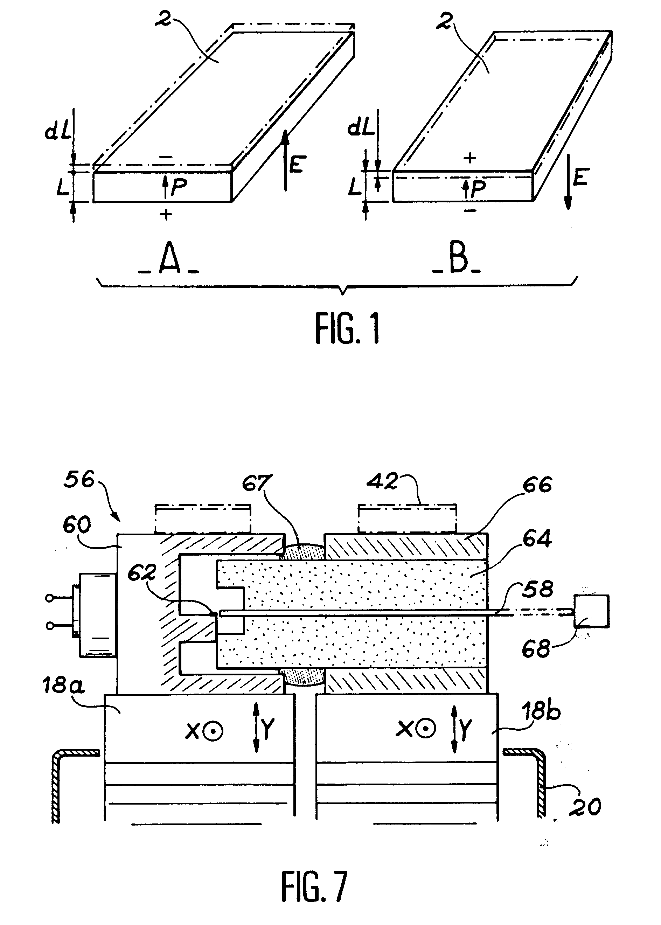

Sur la figure 1 on a représenté schématiquement une plaque piézoélectrique 2, faite par exemple d'un matériau céramique approprié. A cette plaque est associée une polarisation P déterminée. Lorsqu'on applique à la plaque un champ électrique E ayant même direction et même sens que cette polarisation (figure 1-A), en appliquant une tension électrique appropriée entre les faces de la plaque qui sont perpendiculaires à la polarisation P et qui sont préalablement rendues conductrices par métallisation par exemple, la plaque se dilate suivant la direction correspondant à P, sa longueur L en l'absence de champ électrique, comptée parallèlement à la direction de P, augmentant ainsi d'une quantité dL.

Au contraire, lorsque le champ électrique E est parallèle à P mais de sens contraire, la plaque 2 se contracte, sa longueur L étant alors réduite d'une quantité dL.

La variation relative de longueur dL/L est proportionnelle à E (et donc à la tension correspondante), le coefficient de proportionnalité étant classiquement noté d33. Un empilement convenable de N plaques conduit à N fois cette variation relative.

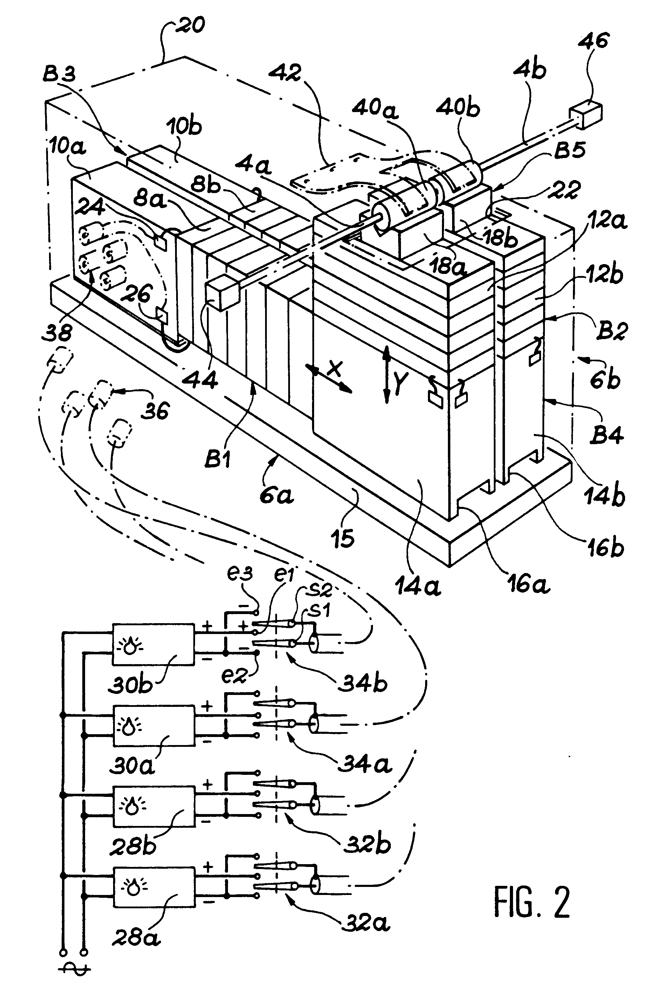

Sur la figure 2, on a représenté schématiquement un mode de réalisation particulier du dispositif objet de l'invention, destiné à l'épissurage de deux fibres optiques 4a et 4b par exemple monomodes.

Le dispositif représenté sur la figure 2 comprend deux ensembles identiques 6a et 6b. Chaque ensemble 6a ou 6b comprend un premier bloc piézoélectrique 8a ou 8b et un premier élément rigide 10a ou 10b ainsi qu'un second bloc piézoélectrique 12a ou 12b et un second élément rigide 14a ou 14b.

Les blocs piézoélectriques et les éléments rigides ont par exemple une forme parallélépipédique.

Chaque bloc est constitué, comme on le verra mieux par la suite, d'un empilement de plaques minces piézoélectriques et peut se déformer, c'est-à-dire se contracter ou se dilater, suivant une direction perpendiculaire à ces plaques.

Chaque bloc 8a (8b) est fixé par ses faces d'extrémité (qui sont perpendiculaires à la direction qui lui correspond) à des faces des éléments 10a et 14a (10b et 14b).

La direction de contraction ou de dilatation du bloc 8a ou 8b est notée X sur la figure 2.

Chaque bloc 12a (12b) est fixé par l'une de ses faces d'extrémité, perpendiculaire à la direction qui lui correspond et qui est notée Y sur la figure 2, à une autre face de l'élément 14a (14b), autre face qui est bien entendu perpendiculaire à la face à laquelle est fixé le bloc 8a (8b), de sorte que les directions X et Y sont perpendiculaires.

On a ainsi deux ensembles 6a et 6b qui sont chacun sensiblement en forme de L, une barre du L correspondant à l'assemblage du bloc 8a (8b) et des éléments 10a et 14a (10b, 14b), l'autre barre correspondant à l'assemblage de 12a (12b) et de 14a (14b).

Le dispositif représenté sur la figure 2 comprend en outre un support ou embase 15 par exemple en forme de plaque mince, qui est destiné à reposer sur un socle non représenté.

Les ensembles 6a et 6b sont fixés par l'intermédiaire de leurs éléments rigides respectifs 10a et 10b sur le support 15, les éléments 14a et 14b reposant quant à eux sur ce support (le procédé de fabrication du dispositif représenté sur la figure 2, dont il sera question par la suite, faisant intervenir un sciage puis une fixation sur le support 15), les directions X relatives aux deux ensembles étant parallèles à ce support, les directions Y lui étant perpendiculaires. En outre, les deux ensembles sont parallèles et séparés l'un de l'autre par un intervalle de quelques millimètres par exemple (qui résulte en fait de l'épaisseur de la scie que l'on utilise pour le sciage mentionné plus haut), de sorte que l'on peut passer d'un ensemble à l'autre par une symétrie plane, le plan de symétrie étant équidistant des deux ensembles.

Lors d'une contraction ou d'une dilatation des blocs 8a et 8b les éléments 14a et 14b correspondant se déplacent en translation sur le support 15. Pour limiter les frottements au cours de tels déplacements, les ensembles 6a et 6b sont de préférence réalisés de façon que les blocs 8a et 8b ne soient pas au contact du support 15. En outre, un dégagement 16a (16b) en forme de rainure parallèle aux directions X est prévu sur la face de l'élément 14a (14b) pour réduire encore ces frottements.

Les blocs piézoélectriques sont réalisés à partir de plaques en céramique piézoélectrique et les éléments rigides ainsi que le support 15 sont par exemple réalisés en un verre tel que la silice, matériau dont la dilatation thermique est négligeable. La réalisation des rainures 16a et 16b dans le cas d'un matériau tel que le verre est importante car elle permet de réduire considérablement l'adhérence moléculaire entre l'élément 14a ou 14b et le support 15.

Le dispositif représenté sur la figure 2 comprend en outre deux vés de positionnement identiques 18a et 18b. Chaque vé 18a (18b) est fixé sur l'autre face d'extrémité du bloc 12a (12b) et l'on passe d'un vé à l'autre par la symétrie plane dont il a été question plus haut pour la position relative des ensembles sur le support 15. En outre, les deux vés sont alignés suivant une direction qui est perpendiculaire aux directions X et Y.

Compte tenu de l'emploi de hautes tensions pour la commande du dispositif, tensions dont il sera question par la suite, un couvercle 20 électriquement isolant, par exemple en plexiglas, recouvre le dispositif, à l'exception des deux vés de positionnement qui dépassent du couvercle grâce à une ouverture 22 prévue à cet effet sur ce couvercle.

Comme on le comprendra mieux par la suite, chaque bloc piézoélectrique est pourvu de deux conducteurs électriques qui permettent la contraction ou la dilatation de ce bloc lorsqu'une tension électrique appropriée est appliquée entre eux. Ces deux conducteurs électriques aboutissent respectivement à deux bornes que l'on a référencées 24 et 26 sur la figure 2 pour le bloc 8a. Ces deux bornes sont par exemple faites en clinquant d'aluminium et collées sur le premier élément rigide correspondant.

La commande des quatre blocs piézoélectriques 8a, 8b, 12a, 12b est réalisée grâce à quatre alimentations haute tension 28a, 28b, 30a, 30b respectivement associées à des dispositifs inverseurs de polarisation 32a, 32b, 34a, 34b. Chaque alimentation haute tension est elle-même alimentée par le secteur (tension alternative 220 V) et fournit en sortie une tension électrique constante dans le temps, qui varie par exemple entre 0 et 500 V, grâce à un potentiomètre de réglage prévu sur cette alimentation.

Chaque alimentation haute tension comporte deux bornes de sortie + et -. L'inverseur de polarisation correspondant comprend trois bornes d'entrée e1, e2, e3 et deux bornes de sorties s1 et s2. Cet inverseur de polarisation comprend en outre deux interrupteurs qui peuvent être commandés simultanément de façon que cet inverseur admette deux états, l'un dans lequel e1 et e3 sont respectivement reliés à s1 et s2 et l'autre dans lequel e1 et e2 sont respectivement reliés à s2 et s1. L'entrée e1 est reliée à la sortie + de l'alimentation et les entrées e2 et e3 sont toutes deux reliées à la sortie - de cette alimentation.

Pour une tension v donnée fournie par l'alimentation, on conçoit donc que l'on puisse obtenir en sortie de l'inverseur la même tension v ou la tension opposée -v suivant l'état de cette inverseur. Celui-ci permet donc d'obtenir, en agissant sur le potentiomètre de l'alimentation, une gamme de tension de 0 à -500V et une gamme de tension de 0 à +500V.

Pour chaque inverseur, les deux bornes de sortie de cet inverseur sont respectivement électriquement reliées aux deux bornes du type 24, 26 du bloc piézoélectrique qui lui est associé. Ces diverses liaisons électriques sont par exemple réalisées au moyen de quatre câbles coaxiaux 36 et de quatre connecteurs coaxiaux 38 montés sur le couvercle 20. Chaque câble coaxial relie ainsi un inverseur à un connecteur coaxial qui est lui même relié aux deux bornes de type 24, 26 correspondant au bloc piézoélectrique qui est associé à l'inverseur considéré.

L'épissurage des fibres 4a et 4b est réalisé de la façon suivante au moyen du dispositif représenté sur la figure 2 :

Il s'agit de relier l'une à l'autre deux extrémités respectives des fibres. A cet effet, ces fibres sont privées de gaine protectrice (généralement en matière élastique) sur une certaine longueur à partir de ces extrémités et les portions ainsi dénudées des fibres sont fixées à l'intérieur de tubes capillaires par exemple en verre 40a et 40b, au moyen d'une colle photopolymérisable par exemple. Les extrémités des deux embouts ainsi obtenus sont alors polies, manuellement par exemple, perpendiculairement à l'axe des tubes capilaires, et sont mises en contact l'une avec l'autre par l'intermédiaire d'un joint de colle photopolymérisable et adaptatrice d'indice.

A titre purement indicatif et nullement limitatif, pour des fibres qui, privées de gaine, ont un diamètre extérieur de 125 micromètres, les tubes capillaires ont un diamètre intérieur calibré à 130 micromètres et un diamètre extérieur de l'ordre de 3 à 4 millimètres.

On dispose ensuite les deux embouts en regard l'un de l'autre dans leurs vés respectifs et l'on maintient ces embouts dans ces vés grâce à une lame ressort 42 dont une extrémité appuie sur les deux embouts et dont l'autre extrémité est fixée sur le couvercle 20.

Dans l'exemple donné ci-dessus pour les tubes capillaires, en l'absence d'excitation des blocs piézoélectriques, on obtient un excentrement global des coeurs de l'ordre de 3 à 6 micromètres.

L'alignement des fibres est donc suffisant pour pouvoir récupérer ou acquérir à l'autre extrémité de la fibre 4b une certaine quantité d'une lumière injectée à l'autre extrémité de la fibre 4a.

L'optimisation de l'alignement des fibres est ainsi effectuée en injectant à cette autre extrémité de la fibre 4a une lumière issue d'une source appropriée 44, en détectant à l'autre extrémité de la fibre 4b une certaine quantité de cette lumière, que l'on détecte grâce à un photodétecteur approprié 46, et en effectuant des contractions et des dilatations appropriées des blocs piézoélectriques, jusqu'à rendre maximale la quantité de lumière tombant sur le photodétecteur 46. D'autres techniques de détection fondées sur la diffusion d'un signal lumineux permettent d'affirmer que s'il n'y a plus de signal diffusé ("détection minimale") l'alignement des coeurs des fibres est parfait).

Le nombre de plaques piézoélectriques dans chaque bloc est choisi de manière à avoir une déformation appréciable de ce bloc. A titre d'exemple, avec la tension de 500V mentionnée plus haut, on choisit des plaques piézoélectriques permettant d'obtenir suivant la direction X une déformation de ± 10 micromètres et la même déformation suivant la direction Y, le nombre de plaques étant égal à 20. Dans cet exemple de réalisation, chaque vé peut ainsi balayer la surface comprise dans un carré de 20 micromètres de côté en faisant varier, pour chacune des directions X et Y, la tension électrique correspondante entre -500V et +500V.

On peut ainsi aligner deux fibres optiques dont les coeurs présentent un excentrement allant jusqu'à 10 micromètres. Dans l'exemple de réalisation donné ci-dessus, on obtient une reproductibilité de positionnement des vés hors tension, c'est-à-dire lorsque les blocs piézoélectriques ne sont pas excités, inférieure à 1 micromètre.

Lorsque l'alignement des deux fibres optiques est optimisé, leurs extrémités sont fixées l'une à l'autre en polymérisant la colle qui les relie au moyen d'une lampe à ultra-violets. L'épissurage des fibres est alors terminé.

L'alignement des fibres peut aussi être réalisé sans utiliser les tubes capillaires, en disposant directement dans les vés de positionnement les portions de fibres privées de leur gaine protectrice et en procédant encore par optimisation de couplage comme on l'a expliqué plus haut. Lorsque la quantité de lumière reçue par le photodétecteur 46 est optimale, les deux extrémités des fibres qui se font faces sont alors soudées l'une à l'autre.

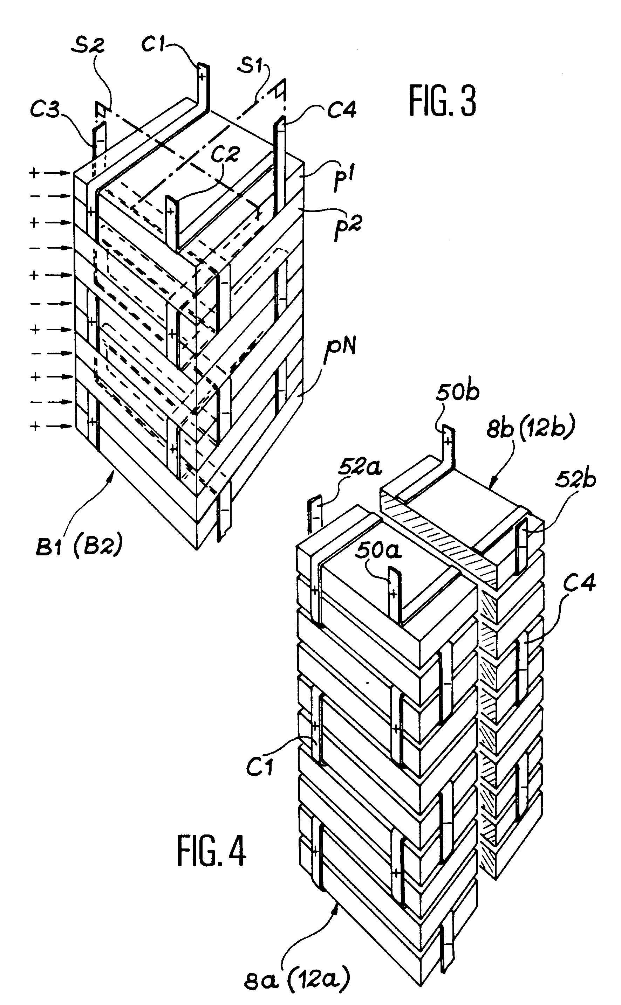

On va maintenant expliquer en se référant aux figures 3 et 4, comment réaliser les blocs piézoélectriques. On réalise en fait un élément piézoélectrique destiné à être coupé en deux parties identiques. On utilise une pluralité de plaques piézoélectriques identiques p1, p2, ..., pN (N étant un nombre entier égal à 20 dans un exemple donné plus haut). Ces plaques ont par exemple une forme rectangulaire ou carrée, de sorte que leur empilement fait apparaître deux plans de symétrie S1 et S2 pour l'élément piézoélectrique obtenu, et sont rendues électriquement conductrices sur leurs deux faces, par dépôt d'une couche métallique par exemple, sauf sur leurs bords, pour éviter tout problème de court-circuit lors de leur empilement.

Ce dernier est réalisé en alternant les polarisations des plaques. En outre, cet empilement nécessite l'utilisation de quatre conducteurs électriques minces C1, C2, C3, C4, par exemple constitués chacun par un ruban de clinquant d'aluminium de largeur adaptée à la surface des plaques.

On réalise alors l'empilement des plaques en insérant entre elles, de la façon indiquée ci-après, les rubans C1, C2, C3, C4, tout en mettant une couche de colle entre les plaques adjacentes. En outre, chaque ruban est soudé à l'une des couches métalliques entre lesquelles il passe pour éviter tout déplacement des rubans lors du montage et de l'utilisation du dispositif.

Les rubans C1 et C2 sont parallèles l'un à l'autre et situés de part et d'autre du plan S1, par exemple sensiblement dans des plans équidistants de ce plan S1. De même, les rubans C3 et C4 sont parallèles l'un à l'autre et situés de part et d'autre du plan S2, par exemple sensiblement dans des plans équidistants de ce plan S2. Les rubans C1 et C2 passent tous deux entre les plaques de rang 2n et 2n + 1, n étant un nombre entier au moins égal à 1, ces rubans formant ainsi deux créneaux. Le montage des rubans C1 et C2 est en outre tel que les deux créneaux soient décalés d'une demi-période de créneau (correspondant sensiblement à l'épaisseur de deux plaques) l'un par rapport à l'autre.

Les rubans C3 et C4 passent tous deux entre les plaques de rang 2n-1 et 2n, ces rubans C3 et C4 formant ainsi deux autres créneaux. Le montage des rubans C3 et C4 est en outre tel que ces deux autres créneaux soient également décalés d'une demi-période de créneau l'un par rapport à l'autre.

L'élément piézoélectrique ainsi obtenu est destiné à être coupé en deux moitiés suivant le plan S1 ou le plan S2, par exemple par sciage, pour donner deux blocs piézoélectriques 8a, 8b ou 12a, 12b (figure 4), comme on le verra par la suite.

L'intérêt de la réalisation exposée en référence aux figures 3 et 4 réside dans le fait que l'on peut effectuer la coupure au choix, suivant le plan S1 ou le plan S2.

Les connexions électriques des blocs se font (ultérieurement) du côté de la plaque p1 ou de la plaque pN. En choisissant par exemple p1 comme côté de connexion et S2 comme plan de coupure, on dispose de part et d'autre de S2, de deux couples d'extrémités libres de rubans conducteurs, 50a, 52a et 50b, 52b, et pour chaque couple, les extrémités libres sont connectées respectivement, lors du montage du dispositif représenté sur la figure 2, aux bornes du type 24, 26 qui leur correspondent. Les extrémités des rubans qui correspondent à l'autre plaque pN restent libres.

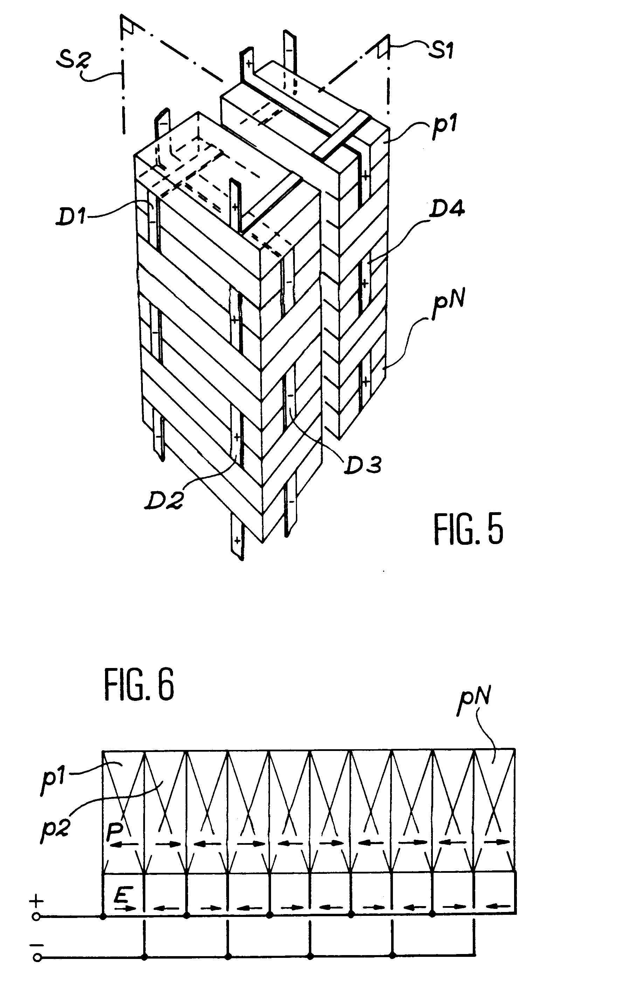

Une variante de réalisation des blocs piézoélectriques est représentée sur la figure 5. Cette variante diffère simplement de la réalisation représentée sur la figure 4 par le fait que les positions des conducteurs C1 et C4 de cette figure 4 ont été permutées. Plus précisément, dans la réalisation de la figure 5, avant coupure (par exemple effectuée ultérieurement suivant le plan S2), on dispose respectivement de part et d'autre du plan S1 (S2) deux rubans conducteurs minces D1 et D2 (D3 et D4) formant des créneaux décalés d'un quart de période de créneau (correspondant à l'épaisseur d'une plaque) l'un par rapport à l'autre. Le ruban D1 (D3) passe entre les plaques de rang 2n-1 et 2n, n étant un nombre entier au moins égal à 1, et le ruban D2 (D4) passe entre les plaques de rang 2n et 2n + 1.

Les signes + et - indiqués sur les figures 3 à 5 ne correspondent qu'à un exemple d'état de polarisation des blocs piézoélectriques, exemple donné pour une meilleure compréhension des connexions électriques entre les différentes plaques. Bien entendu, l'autre état de polarisation serait être obtenu en permutant les signes + et -.

Sur la figure 6, on a représenté un schéma électrique correspondant aux connexions électriques entre les plaques p1, ..., pN. On voit que ces plaques ont des polarisations P alternées dans l'empilement. Sur la figure 6, on a fait un choix dans lequel la flèche symbolisant la polarisation de la première plaque p1 a sa pointe tournée vers la gauche mais le choix inverse est possible (pointe tournée vers la droite) en respectant bien entendu l'alternance des polarisations des plaques. On a également représenté sur la figure 6 l'un des deux états de polarisation pour l'empilement. On voit que pour l'état de polarisation représenté, le champ électrique E relatif à une plaque est opposé à la polarisation de cette plaque et ce pour toutes les plaques. Il y a donc contraction de l'empilement. Dans l'autre état de polarisation (non représenté), le champ E serait de même sens que P pour chacune des plaques et il y aurait dilatation de l'empilement.

On va maintenant indiquer comment réaliser les ensembles 6a et 6b représentés sur la figure 2. On commence par fabriquer un bloc B1 et un bloc B2 du genre de celui qui est représenté sur la figure 3 (ou sur la figure 5). Le bloc B1 donnera par la suite, par sciage, les blocs 8a et 8b et le bloc B2, les blocs 12a et 12b. On fixe le bloc B1 entre deux blocs rigides B3 et B4 (deux rainures parallèles, destinées à former les rainures 16a et 16b, étant préalablement réalisées sur ce bloc B4), le bloc B3 donnant par la suite, par sciage, les éléments 10a et 10b et le bloc B4, les éléments 14a et 14b. On fixe ensuite au moyen d'une colle appropriée le bloc B2 sur le bloc B4 puis l'on fixe sur le bloc B2, au moyen d'une colle appropriée, un vé B5 destiné à donner ensuite par sciage les vés 18a et 18b. Les blocs B3 et B4, qui sont parallélépipédiques, possèdent au moins un plan de symétrie et l'assemblage des blocs B1 à B4 et du vé B5 est fait de manière que les plans de symétrie respectifs de B1, B2, B3, B4, B5 soient confondus.

Après réalisation de l'assemblage, le bloc B3 est fixé, au moyen d'une colle appropriée, au support 15 de telle manière que le bloc B4 repose sur le support et que les directions X et Y soient respectivement parallèles et perpendiculaires à ce support. Ensuite, l'assemblage des blocs B1 à B4 et du vé B5 est scié suivant le plan de symétrie dudit assemblage, en deux moitiés correspondant respectivement aux ensembles 6a et 6b, en épargnant le support 15 au cours du sciage et en entamant simplement ce support légèrement au cours du sciage. On obtient ainsi deux ensembles 6a et 6b solidaires, identiques et en parfait vis-à-vis.

On réalise alors les connexions électriques entre les extrémités de ruban conducteur et les bornes du type 24, 26 correspondantes.

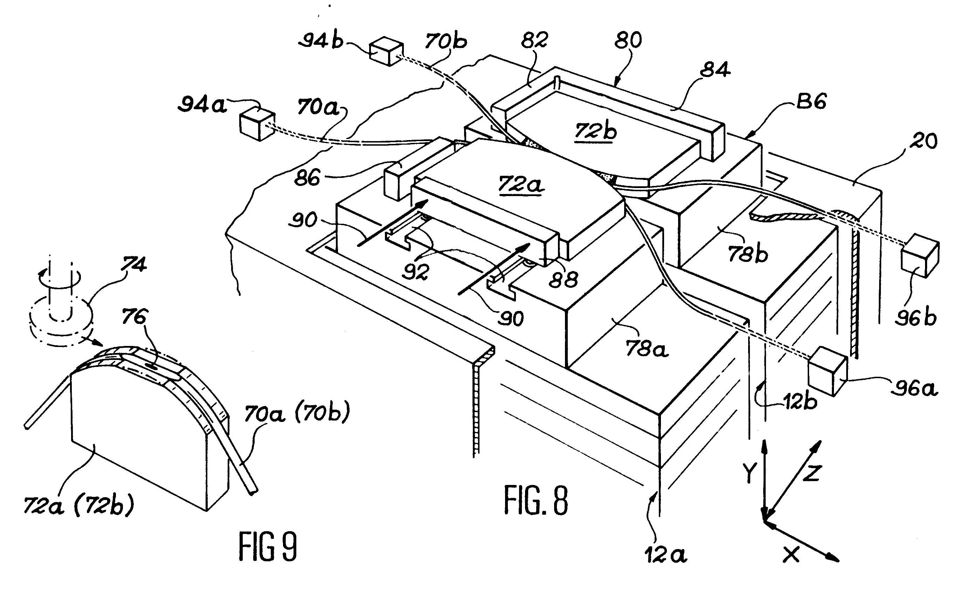

La figure 7 illustre schématiquement le raccordement d'une diode laser 56 à une fibre optique par exemple monomode 58. A cet effet, on peut utiliser le dispositif schématiquement représenté sur la figure 2. La diode 56 comprend un boîtier 60 dont le pourtour a une forme cylindrique de révolution. Ce boîtier 60 comporte une cavité de forme cylindrique de révolution, coaxiale audit pourtour et la surface émissive 62 de la diode se trouve dans cette cavité et sur l'axe de celle-ci. La fibre est fixée dans un tube approprié 64, suivant l'axe de ce tube. L'extrémité du tube destinée à se trouver en regard de la surface émissive de la diode, comporte une cavité dans laquelle apparaît l'extrémité de la fibre destinée à recevoir la lumière de la diode. Le tube 64 est lui-même fixé dans une bague 66 coaxiale. Le diamètre extérieur du tube est légèrement inférieur, d'un millimètre par exemple, au diamètre de la cavité du boîtier 60 et le diamètre extérieur de la bague 66 est identique au diamètre extérieur du boîtier 60.

Pour réaliser le raccordement, on insère l'extrémité du tube 64 dans la cavité du boîtier 60 et l'on relie ce dernier à la bague 66 par une couche de colle photopolymérisable 67. Après cette insertion, la surface émettrice de la diode se trouve dans l'axe de la fibre 58. On place ensuite la diode et la fibre respectivement dans les vés 18a et 18b dans lesquels elles se trouvent ensuite maintenues grâce à la lame ressort 42.

On fait ensuite fonctionner la diode 56 grâce à des moyens d'alimentation en courant électrique non représentés. On peut alors détecter à l'autre extrémité de la fibre 58, grâce à des moyens photodétecteurs 68, une certaine quantité de la lumière fournie par la diode et l'on fait subir aux différents blocs piézoélectrique des contractions et des dilatations appropriées jusqu'à rendre maximale cette quantité de lumière détectée à l'autre extrémité de la fibre 58. Lorsque le positionnement est ainsi optimisé, on polymérise la colle par exemple au moyen d'une lampe à rayonnement ultraviolet.

Sur la figure 8, on a représenté schématiquement un autre mode de réalisation particulier du dispositif objet de l'invention, permettant la fabrication d'un coupleur optique en X. A cet effet, on utilise deux fibres optiques 70a et 70b par exemple monomodes. Ces fibres sont préparées de la façon suivante : on réalise deux plaquettes 72a et 72b dont le pourtour comporte une partie courbe par exemple cylindrique. Une rainure en vé équidistante des faces de la plaquette est réalisée sur cette partie courbe. Une portion de la fibre 70a (70b) est collée dans la rainure de la plaquette 72a (72b). On usine ensuite chaque plaquette par un outil approprié 74, par exemple par sciage ou polissage, de manière à faire apparaître le coeur 76 de chaque portion de fibre au niveau du milieu de celle-ci, de sorte qu'en mettant au contact l'une de l'autre les parties usinées des plaquettes, les coeurs ainsi apparents sont au contact l'un de l'autre.

Le dispositif représenté sur la figure 8 est identique au dispositif représenté sur la figure 2 à ceci près que les vés 18a et 18b sont remplacés par deux blocs parallélépipédiques en verre 78a et 78b obtenus par sciage d'un bloc parallélépipédique unique B6 qui, avant l'opération de sciage, est fixé au bloc B2 de façon que des arêtes de B6 soient perpendiculaires aux directions X et Y.

Une équerre 80 est fixée sur le bloc 78b. Une branche 84 de cette équerre est parallèle à la direction X et l'autre branche 82 est parallèle à une direction Z qui est perpendiculaire aux deux directions X et Y. Une réglette 86 est fixée sur le bloc 78a en alignement avec la branche 82.

On précise que chaque plaquette a la forme d'un parallélépipède rectangle dont une face est rendue courbe pour constituer la partie courbe de la plaquette et de telle manière que cette plaquette admette un plan de symétrie passant par le milieu de la partie courbe, ladite rainure en vé étant dans ce plan.

Pour réaliser le coupleur en X, on procède de la façon suivante : on met en butée la plaquette 72b dans l'équerre 80 et l'on met en butée, sur le bloc 78a la plaquette 72a, contre la réglette 86 et la plaquette 72b, les coeurs rendus apparents venant au contact l'un de l'autre. La plaquette 72a est maintenue contre la plaquette 72b au moyen d'une autre réglette 88 qui appuie contre la plaquette 72a grâce un à moyen élastique représenté par des flèches 90, ce moyen élastique étant fixé au couvercle 20. Le mobilité de la réglette 88 selon la direction Z est assurée par des rainures 92 qui sont réalisées dans le bloc 78a et dans lesquelles coulissent des pions fixés à la réglette 88. En outre, la lame ressort 42 (figure 2) non représentée sur la figure 8, appuie sur les plaquettes 72a et 72b pour les maintenir contre les blocs 78a et 78b.

Après avoir mis les plaquettes 72a et 72b l'une contre l'autre dans le dispositif, on met de la colle photopolymérisable entre les parties courbes des plaquettes.

Ensuite, on injecte dans les extrémités homologues des fibres 70a et 70b et au moyen de sources lumineuses appropriées 94a et 94b, de la lumière dont on peut détecter une partie en les autres extrémités des fibres grâce à des photodétecteurs appropriés 96a et 96b.

On commande alors les blocs piézoélectriques de manière à leurs faire exécuter des contractions et des dilatations appropriées jusqu'à rendre maximale ces quantités de lumière détectées et l'on polymérise ensuite la colle par exemple au moyen d'une lampe à rayonnement ultra-violet. Le coupleur en X est ainsi obtenu.

## Revendications

1. Dispositif d'alignement mutuel de deux éléments optiques, comprenant deux ensembles réglables (6a, 6b), placés en regard l'un de l'autre sur un même support (15) et équidistants d'un plan, pour aligner les éléments optiques par des déplacements suivant des directions X et Y parallèles au plan, la direction Y étant perpendiculaire à la direction X, chaque ensemble comprenant des moyens piézoélectriques aptes à se contracter ou se dilater, et un support de réception (18a, 18b; 78a, 78b) pour porter un élément optique, caractérisé en ce que les deux ensembles (6a, 6b) sont identiques de manière à pouvoir passer de l'un à l'autre par symétrie par rapport audit plan, en ce que chaque ensemble comprend en outre un premier élément rigide (10a, 10b) fixé audit même support (15) et un second élément rigide (14a, 14b), en ce que les moyens piézoélectriques de cet ensemble comprennent :
   - un premier bloc piézoélectrique (8a, 8b) apte à se contracter ou se dilater suivant la direction X et ayant une première face d'extrémité et une seconde face d'extrémité respectivement fixées aux premier et second éléments rigides,
   - un second bloc piézoélectrique (12a, 12b) apte à se contracter ou se dilater suivant la direction Y et ayant une première face d'extrémité et une seconde face d'extrémité respectivement fixées au second élément rigide et au support de réception (18a, 18b ; 78a, 78b) correspondant,
   les premiers blocs étant situés en regard l'un de l'autre, les seconds blocs étant également situés en regard l'un de l'autre, et les supports de réception étant prévus pour permettre l'alignement de deux éléments optiques respectivement portés par ces supports de réception, par des contractions et des dilatations appropriées des premiers et seconds blocs.

2. Dispositif selon la revendication 1, caractérisé en ce que, dans chaque ensemble, le second élément rigide (14a, 14b) repose sur ledit même support.

3. Dispositif selon la revendication 2, caractérisé en ce que le second élément rigide (14a, 14b) repose sur ledit même support (15) par l'intermédiaire d'une face sur laquelle est ménagé un évidement (16a, 16b).

**4.** Dispositif selon l'une quelconque des revendications 2 et 3, caractérisé en ce que ledit même support (15) et les éléments rigides (10a, 10b, 14a, 14b) sont faits d'un même matériau.

**5.** Dispositif selon la revendication 4, caractérisé en ce que ce matériau est le verre.

**6.** Dispositif selon l'une quelconque des revendications 1 à 5, caractérisé en ce que les supports de réception sont deux vés identiques (18a, 18b), respectivement fixés aux seconds blocs piézoélectriques (12a, 12b) parallèlement à une direction perpendiculaire aux directions X et Y et de telle manière que ces vés soient alignés lorsque les blocs piézoélectriques ne sont pas excités électriquement, ces vés étant destinés à recevoir respectivement deux éléments optiques (40a, 40b; 56, 58) dont le pourtour est prévu à cet effet.

**7.** Dispositif selon la revendication 6 et l'une quelconque des revendications 4 et 5, caractérisé en ce que les vés (18a, 18b) sont faits dudit même matériau.

**8.** Dispositif selon l'une quelconque des revendications 1 à 7, caractérisé en ce que chaque bloc (8a, 8b, 12a, 12b) comprend un empilement de plusieurs plaques (p1, ..., pN) piézoélectriques agencées de façon à permettre une contraction ou une dilatation globale du bloc.

**9.** Dispositif selon la revendication 8, caractérisé en ce que chaque plaque (p1, ..., pN) comporte deux faces opposées rendues électriquement conductrices, en ce que l'empilement des plaques est réalisé de façon que deux plaques adjacentes de cet empilement aient une face en commun, en ce que la face en commun de deux plaques adjacentes, ces deux plaques formant un couple, est électriquement reliée à la face en commun correspondant à un couple adjacent de plaques, et en ce que les polarisations respectives des plaques sont alternées.

**10.** Procédé de fabrication d'un dispositif d'alignement d'éléments optiques, comprenant les étapes successives suivantes :
- on réalise un premier (B1) et un second (B2) blocs piézoélectriques ayant chacun deux faces d'extrémité, chaque bloc ayant un plan de symétrie partageant ce bloc en deux parties identiques (8a, 8b; 12a, 12b), ce bloc comprenant un empilement de plusieurs plaques piézoélectriques (p1, ..., pN) suivant une direction donnée, parallèle au plan de symétrie, cet empilement faisant apparaître deux faces d'extrémité pour le bloc, les plaques étant agencées de façon à permettre une contraction ou une dilatation globale du bloc et des parties identiques lorsqu'elles sont séparées, suivant la direction donnée,
- on fixe un premier élément rigide (B3) admettant un plan de symétrie, à l'une des faces d'extrémité du premier bloc piézoélectrique (B1) et de manière que le plan de symétrie de ce dernier soit confondu avec le plan de symétrie du premier élément rigide,
- on fixe un second élément rigide (B4) admettant un plan de symétrie, à l'autre face d'extrémité de ce premier bloc (B1) et de manière que le plan de symétrie de ce dernier soit confondu avec le plan de symétrie du second élément rigide,
- on fixe l'une des faces d'extrémité du second bloc piézoélectrique (B2) au second élément rigide (B4) de telle manière que les directions (X, Y) respectivement relatives aux blocs piézoélectriques (B1, B2) soient perpendiculaires et que les plans de symétrie du second bloc piézoélectrique et du second élément rigide soient confondus,
- on fixe un support de réception (B5) apte à recevoir les éléments optiques et admettant un plan de symétrie, sur l'autre face d'extrémité du second bloc piézoélectrique (B2) et de manière que le plan de symétrie de ce dernier soit confondu avec le plan de symétrie du support de réception,
- on fixe le premier élément rigide (B3) sur un support (15) de telle façon que le second élément rigide (B4) repose contre ce supports (15), et
- l'on effectue une coupure, suivant les plans de symétrie confondus, de l'ensemble comprenant les deux blocs piézoélectriques (B1, B2), les deux éléments rigidess (B3, B4) et le support de réception, en entamant le support (15).

**11.** Procédé selon la revendication 10, caractérisé en ce que chaque bloc piézoélectrique (B1, B2) est obtenu par empilement de plaques piézoélectriques identiques (p1, ..., pN), comportant deux faces opposées rendues électriquement conductrices et possédant un premier (S1) et un second (S2) plans de symétrie perpendiculaires l'un à l'autre ainsi qu'aux faces opposées, en alternant les polarisations respectives des plaques et en faisant passer :

- de part et d'autre du premier plan de symétrie (S1), deux conducteurs électriques minces et continus (C1, C2), sensiblement parallèles, entre les plaques de rang 2n et 2n + l dans l'empilement, n étant un nombre entier au moins égal à un, et de façon que, observés suivant le second plan de symétrie (S2), ces conducteurs forment respectivement sensiblement des créneaux décalés d'une demi-période de créneau l'un par rapport à l'autre, et
- de part et d'autre du second plan de symétrie (S2), deux conducteurs électriques minces et continus (C3, C4), sensiblement parallèles, entre les plaques de rang 2n-1 et 2n dans l'empilement, et de façon que, observés suivant le premier plan de symétrie (S1), ces conducteurs forment respectivement sensiblement des créneaux décalés d'une demi-période de créneau l'un par rapport à l'autre.

12. Procédé selon la revendication 10, caractérisé en ce que chaque bloc piézoélectrique (B1, B2) est obtenu par empilement de plaques piézoélectriques identiques (p1, ..., pN), comportant deux faces opposées rendues électriquement conductrices et possédant un premier (S1) et un second (S2) plans de symétrie perpendiculaires l'un à l'autre ainsi qu'aux faces opposées, en alternant les polarisations respectives des plaques et en faisant passer :

- de part et d'autre du premier plan de symétrie (S1), deux conducteurs électriques minces et continus (D1, D2), sensiblement parallèles, entre les plaques de rang 2n et 2n + 1 dans l'empilement pour l'un des deux conducteurs, et de rang 2n-1 et 2n pour l'autre conducteur, n étant un nombre entier au moins égal à un, et de façon que, observés suivant le second plan de symétrie (S2), ces conducteurs (D1, D2) forment respectivement sensiblement des créneaux décalés d'un quart de période de créneau l'un par rapport à l'autre, et
- de part et d'autre du second plan de symétrie (S2), deux conducteurs électriques minces et continus (D3, D4), sensiblement parallèles, entre les plaques de rang 2n et 2n + 1 dans l'empilement pour l'un des deux conducteurs, et de rang 2n-1 et 2n pour l'autre conducteur, et de façon que, observés suivant le premier plan de symétrie (S1), ces conducteurs (D3, D4) forment respectivement sensiblement des créneaux décalés d'un quart de période de créneau l'un par rapport à l'autre.

13. Procédé de raccordement de deux fibres optiques (4a, 4b), ce procédé utilisant un dispositif d'alignement mutuel de deux éléments optiques, comportant deux ensembles réglables respectivement munis de deux vés, procédé selon lequel :

- on dispose les fibres respectivement dans les vés (18a, 18b) de façon que ces fibres aient des extrémités respectives sensiblement en regard l'une de l'autre,
- on injecte de la lumière dans l'autre extrémité de l'une (4a) des deux fibres et l'on détecte une quantité de ladite lumière à l'autre extrémité de l'autre fibre (4b), en effectuant des réglages appropriés pour rendre maximale la quantité de lumière détectée à l'autre extrémité de l'autre fibre, après quoi
- l'on fixe l'une à l'autre les extrémités des fibres,

procédé caractérisé en ce que le dispositif est conforme à l'une quelconque des revendications 6 et 7 et en ce que les réglages sont des contractions et des dilatations appropriées des premiers et seconds blocs (8a, 8b, 12a, 12b).

14. Procédé selon la revendication 13, caractérisé en ce que préalablement à sa disposition dans le vé qui lui correspond, chaque fibre (4a, 4b) est privée de gaine protectrice sur une portion s'étendant à partir de ladite extrémité, en ce que cette portion est fixée dans un embout cylindrique de révolution (40a, 40b), en ce que les extrémités associées de l'embout et de la fibre sont ensuite polies perpendiculairement à l'axe de l'embout, et en ce que ces embouts sont reliés par un joint de colle photopolymérisable, cette colle étant polymérisée après avoir respectivement disposé les embouts dans les vés et rendu maximale la quantité de lumière détectée à l'autre extrémité de l'autre fibre.

15. Procédé de raccordement d'une fibre optique (58) à une diode photoémettrice (56) ayant une surface photoémissive (62), ce procédé utilisant un dispositif d'alignement mutuel de deux éléments optiques, comportant deux ensembles réglables respectivement munis de deux vés, procédé selon lequel :

- on dispose la fibre et la diode respectivement dans les vés (18b, 18a) de façon que la surface photoémissive de la diode soit sensiblement en regard de l'une des extrémités de la fibre,

- on fait émettre de la lumière par la diode et l'on détecte une quantité de ladite lumière à l'autre extrémité de la fibre, en effectuant des réglagles appropriés pour rendre maximale la quantité de lumière détectée à l'autre extrémité de la fibre, après quoi
- l'on fixe l'une à l'autre la fibre et la diode photoémettrice,

procédé caractérisé en ce que le dispositif est conforme à l'une quelconque des revendications 6 et 7 et en ce que les réglages sont des contractions et des dilatations appropriées des premiers et seconds blocs (8a, 8b, 12a, 12b).

16. Procédé de raccordement de deux fibres optiques (70a, 70b) en vue d'obtenir un coupleur optique en X, ce procédé utilisant un dispositif d'alignement mutuel de deux éléments optiques, comportant deux ensembles réglables respectivement munis de deux supports de réception, procédé selon lequel :

- on réalise deux plaquettes identiques (72a, 72b), le pourtour de chaque plaquette comportant au moins une portion courbe dont la convexité est tournée vers l'extérieur de la plaquette et qui est pourvue d'une rainure s'étendant le long de cette portion,
- on fixe des portions respectives des fibres respectivement dans les rainures,
- on fait apparaître une portion de coeur (76) de chaque fibre au niveau du milieu de ladite portion de fibre placée dans la rainure correspondante,
- on dispose respectivement les plaquettes sur les deux supports de réception (78a, 78b),
- on y maintient les plaquettes de manière que les portions de coeur soient au contact l'une de l'autre et que les portions de fibres soient sensiblement dans un même plan parallèle à la direction X et à une direction (Z) perpendiculaire aux directions X et Y,
- on injecte de la lumière dans une extrémité de chacune des deux fibres, on détecte une quantité de ladite lumière à l'autre extrémité de chacune des fibres, en effectuant des réglages appropriés pour rendre maximale la quantité de lumière détectée à chaque autre extrémité, après quoi
- l'on fixe l'une à l'autre les portions des fibres,

procédé caractérisé en ce que le dispositif est conforme à l'une quelconque des revendications 1 à 5 et en ce que les réglages sont des contractions et des dilatations appropriées des premiers et seconds blocs (8a, 8b, 12a, 12b).

**Claims**

1. Device for mutually aligning two optical elements, comprising two regulable assemblies (6a, 6b) positioned opposite one another on the same support (15) and equidistant from a plane, for aligning the optical elements by displacements in directions X and Y parallel to the plane, the direction Y being perpendicular to the direction X, each assembly comprising piezoelectric means capable of contracting or expanding, and a receiving support (18a, 18b; 78a, 78b) for carrying an optical element, characterized in that the two assemblies (6a, 6b) are identical such that it is possible to pass from one to the other by symmetry with respect to the said plane, in that each assembly further comprises a first rigid element (10a, 10b) fixed to the said same support (15) and a second rigid element (14a, 14b), in that the piezoelectric means of this assembly comprise:

- a first piezoelectric block (8a, 8b) capable of contracting or expanding in the direction X and having a first end face and a second end face respectively fixed to the first and second rigid elements,
- a second piezoelectric block (12a, 12b) capable of contracting or expanding in the direction Y and having a first end face and a second end face respectively fixed to the second rigid element and to the corresponding receiving support (18a, 18b; 78a, 78b),

the first blocks being located opposite one another, the second blocks also being located opposite one another, and the receiving supports being provided in order to allow the alignment of two optical elements respectively carried by these receiving supports, by appropriate contractions and expansions of the first and second blocks.

2. Device according to Claim 1, characterized in that, in each assembly, the second rigid element (14a, 14b) bears on the said same support.

3. Device according to Claim 2, characterized in that the second rigid element (14a, 14b) bears on the said same support (15) by way of a face in which a recess (16a, 16b) is made.

4. Device according to either of Claims 2 and 3, characterized in that the said same support (15) and the rigid elements (10a, 10b, 14a, 14b) are made from the same material.

5. Device according to Claim 4, characterized in that this material is glass.

6. Device according to any one of Claims 1 to 5, characterized in that the receiving supports are two identical V-blocks (18a, 18b), respectively fixed to the second piezoelectric blocks (12a, 12b) parallel to a direction perpendicular to the directions X and Y and such that these V-blocks are aligned when the piezoelectric blocks are not electrically excited, these V-blocks being intended to receive respectively two optical elements (40a, 40b; 56, 58) and the periphery thereof being constructed to this end.

7. Device according to Claim 6 and either of Claims 4 and 5, characterized in that the V-blocks (18a, 18b) are made from the said same material.

8. Device according to any one of Claims 1 to 7, characterized in that each block (8a, 8b, 12a, 12b) comprises a stack of a plurality of piezoelectric plates (p1, ..., pN) arranged so as to allow a global contraction or expansion of the block.

9. Device according to Claim 8, characterized in that each plate (p1, ..., pN) has two opposite faces made electrically conductive, in that the stack of plates is arranged such that two adjacent plates of this stack have a common face, in that the common face of two adjacent plates, these two plates forming a couple, is electrically connected to the common face corresponding to an adjacent couple of plates, and in that the respective polarizations of the plates are alternated.

10. Method of manufacturing a device for aligning optical elements, comprising the following successive steps:
  - a first (B1) and a second (B2) piezoelectric block, each having two end faces, are produced, each block having a plane of symmetry dividing this block into two identical parts (8a, 8b; 12a, 12b), this block comprising a stack of a plurality of piezoelectric plates (p1, ..., pN) in a given direction, parallel to the plane of symmetry, this stack exposing two end faces for the block, the plates being arranged so as to allow a global contraction or expansion of the block and of the identical parts when they are separated, in the given direction,
  - a first rigid element (B3) having a plane of symmetry is fixed to one of the end faces of the first piezoelectric block (B1) and such that the plane of symmetry of the latter coincides with the plane of symmetry of the first rigid element,
  - a second rigid element (B4) having a plane of symmetry is fixed to the other end face of this first block (B1) and such that the plane of symmetry of the latter coincides with the plane of symmetry of the second rigid element,
  - one of the end faces of the second piezoelectric block (B2) is fixed to the second rigid element (B4) such that the directions (X, Y) respectively relating to the piezoelectric blocks (B1, B2) are perpendicular and such that the planes of symmetry of the second piezoelectric block and of the second rigid element coincide,
  - a receiving support (B5) suitable for receiving the optical elements and having a plane of symmetry is fixed on the other end face of the second piezoelectric block (B2) and such that the plane of symmetry of the latter coincides with the plane of symmetry of the receiving support,
  - the first rigid element (B3) is fixed on a support (15) such that the second rigid element (B4) bears against this support (15), and
  - a cut, following the coincident planes of symmetry, is made in the assembly comprising the two piezoelectric blocks (B1, B2), the two rigid elements (B3, B4) and the receiving support, scoring the support (15).

11. Method according to Claim 10, characterized in that each piezoelectric block (B1, B2) is obtained by stacking identical piezoelectric plates (p1, ..., pN) having two opposite faces made electrically conductive and having a first (S1) and a second (S2) plane of symmetry perpendicular to one another and to the opposite faces, alternating the respective polarizations of the plates and passing:
  - on either side of the first plane of symmetry (S1) two thin, continuous electrical conductors (C1, C2), substantially parallel, between the plates of row $2n$ and $2n + 1$ in the stack, $n$ being a whole number which is at least equal to one, and such that, as seen in the second plane of symmetry (S2), these conductors respectively substantially form square tooth patterns which are 180° offset from one another, and

- on either side of the second plane of symmetry (S2) two thin, continuous electrical conductors (C3, C4), substantially parallel, between the plates of row 2n-1 and 2n in the stack, and such that, as seen in the first plane of symmetry (S1), these conductors respectively substantially form square tooth patterns which are 180° offset from one another.

12. Method according to Claim 10, characterized in that each piezoelectric block (B1, B2) is obtained by stacking identical piezoelectric plates (p1, ..., pN), having two opposite faces made electrically conductive and having a first (S1) and a second (S2) plane of symmetry perpendicular to one another and to the opposite faces, alternating the respective polarizations of the plates and passing:

- on either side of the first plane of symmetry (S1), two thin, continuous electrical conductors (D1, D2), substantially parallel, between the plates of row 2n and 2n + 1 in the stack for one of the two conductors, and of row 2n-1 and 2n for the other conductor, n being a whole number which is at least equal to one, and such that, as seen in the second plane of symmetry (S2), these conductors (D1, D2) respectively substantially form square tooth patterns which are 90° offset from one another, and
- on either side of the second plane of symmetry (S2) two thin, continuous electrical conductors (D3, D4), substantially parallel, between the plates of row 2n and 2n + 1 in the stack for one of the two conductors, and of row 2n-1 and 2n for the other conductor, and such that, as seen in the first plane of symmetry (S1), these conductors (D3, D4) respectively substantially form square tooth patterns which are 90° offset from one another.

13. Method of connecting two optical fibres (4a, 4b), this method employing a device for mutually aligning two optical elements, having two regulable assemblies respectively equipped with two V-blocks, a method according to which:

- the fibres are arranged respectively in the V-blocks (18a, 18b) such that these fibres have respective ends substantially opposite one another,
- light is injected into the other end of one (4a) of the two fibres and a quantity of the said light is detected at the other end of the other fibre (4b), while carrying out appropriate regulating measures in order to maximize the quantity of light detected at the other end of the other fibre, then
- the ends of the fibres are fixed to one another,

which method is characterized in that the device is in accordance with either of Claims 6 and 7, and in that the regulating measures are appropriate contractions and expansions of the first and second blocks (8a, 8b, 12a, 12b).

14. Method according to Claim 13, characterized in that, prior to its arrangement in the V-block corresponding to it, each fibre (4a, 4b) is stripped of its protective sheath over a portion extending from the said end, in that this portion is fixed in a revolving cylindrical socket (40a, 40b), in that the ends associated with the socket and with the fibre are then ground perpendicular to the axis of the socket, and in that these sockets are connected by a photo-polymerizable adhesive gasket, this adhesive being polymerized after having respectively arranged the sockets in the V-blocks and after having maximized the quantity of light detected at the other end of the other fibre.

15. Method of connecting an optical fibre (58) to a photoemitter diode (56) having a photoemissive surface (62), this method employing a device for mutually aligning two optical elements, having two regulable assemblies respectively equipped with two V-blocks, a method according to which:

- the fibre and the diode are respectively arranged in the V-blocks (18b, 18a) such that the photoemissive surface of the diode is substantially opposite one of the ends of the fibre,
- light is emitted by the diode and a quantity of the said light is detected at the other end of the fibre, while carrying out appropriate regulating measures in order to maximize the quantity of light detected at the other end of the fibre, then
- the fibre and the photoemitter diode are fixed to one another,

which method is characterized in that the device is in accordance with either of Claims 6 and 7, and in that the regulating measures are appropriate contractions and expansions of the first and second blocks (8a, 8b, 12a, 12b).

14

16. Method of connecting two optical fibres (70a, 70b) in order to obtain an optical X-shaped coupling, this method employing a device for mutually aligning two optical elements, having two regulable assemblies respectively equipped with two receiving supports, a method according to which:

- two identical platelets (72a, 72b) are provided, the periphery of each platelet having at least one curved portion whereof the convexity is directed towards the exterior of the platelet and which is provided with a groove extending along this portion,
- respective portions of the fibres are respectively fixed in the grooves,
- a core portion (76) of each fibre is exposed in the region of the centre of the said portion of fibre positioned in the corresponding groove,
- the platelets are respectively arranged on the two receiving supports (78a, 78b),
- the platelets are held thereon such that the core portions are in contact with one another and such that the portions of fibres are substantially in the same plane parallel to the direction X and to a direction (Z) perpendicular to the directions X and Y,
- light is injected into an end of each of the two fibres, a quantity of the said light is detected at the other end of each of the fibres, while carrying out appropriate regulating measures in order to maximize the quantity of light detected at each other end, then
- the portions of the fibres are fixed to one another,

which method is characterized in that the device is in accordance with any one of Claims 1 to 5, and in that the regulating measures are appropriate contractions and expansions of the first and second blocks (8a, 8b, 12a, 12b).

**Patentansprüche**

1. Vorrichtung zur Ausrichtung von zwei Optikteilen. bestehend aus zwei einstellbaren Einheiten (6a, 6b), die sich gegenüberstehend auf demselben Träger (15) und im gleichen Abstand von einer Ebene befinden, um die Optikteile durch Verschiebungen in den Richtungen X und Y parallel zur Ebene auszurichten, wobei sich die Richtung Y senkrecht zur Richtung X befindet, wobei zu jeder Einheit piezoelektrische Mittel, die in der Lage sind, sich zusammenzuziehen oder sich auszudehen, und ein Empfangsträger (18a, 18b; 78a, 78b), der ein Optikteil trägt, gehören, dadurch gekennzeichnet, daß die beiden Einheiten (6a, 6b) identisch sind, sodaß von einem zum anderen in Symmetrie zur genannten Ebene gewechselt werden kann, und daß jede Einheit ferner ein erstes starres Element (10a, 10b), das auf demselben Träger (15) befestigt ist, und ein zweites starres Element (14a, 14b) umfaßt und daß die piezoelektrischen Mittel dieser Einheit folgendes umfassen:

- einen ersten piezoelektrischen Block (8a, 8b), der sich in Richtung X zusammenziehen oder ausdehnen kann und der eine erste Endseite und eine zweite Endseite hat, die jeweils an dem ersten starren beziehungsweise an dem zweiten starren Element befestigt ist,
- einen zweiten piezoelektrischen Block (12a, 12b), der sich in Richtung X zusammenziehen oder ausdehnen kann und der eine erste Endseite und eine zweite Endseite hat, die jeweils an dem ersten starren Element bzw. am entsprechenden Empfangsträger (18a, 18b; 78a, 78b) befestigt ist, wobei sich die ersten Elemente gegenüberliegen und sich die zweiten Elemente ebenfalls gegenüberliegen und die Empfangsträger in der Weise vorgesehen sind, daß sie die Ausrichtung der beiden von diesen Empfangsträgern getragenen Optikteile durch entsprechende Zusammenziehungen und Ausdehnungen der ersten und der zweiten Elemente ermöglichen.

2. Vorrichtung nach Anspruch 1, dadurch gekennzeichnet, daß in jeder Einheit das zweite starre Element (14a, 14b) auf demselben genannten Träger ruht.

3. Vorrichtung nach Anspruch 2, dadurch gekennzeichnet, daß das zweite starre Element (14a, 14b) mittels einer Aussparung (16a, 16b) auf einer Seite auf demselben genannten Träger (15) ruht.

4. Vorrichtung nach einem der Ansprüche 2 bis 3, dadurch gekennzeichnet, daß der genannte Träger (15) und die starren Elemente (10a, 10b, 14a, 14b) aus demselben Material bestehen.

5. Vorrichtung nach Anspruch 4, dadurch gekennzeichnet, daß dieses Material Glas ist.

6. Vorrichtung nach einem der Ansprüche 1 bis 5, dadurch gekennzeichnet, daß die Empfangsträger zwei identische Prismen sind (18a, 18b), die jeweils an den zweiten piezoelektrischen Blöcken bzw. Elementen (12a, 12b) befestigt sind, parallel zur senkrechten Richtung der Richtungen X und Y und so, daß diese Prismen ausgerichtet sind, wenn die piezoelektrischen Blöcke elektrisch nicht erregt sind, wobei diese Prismen dazu dienen, jeweils zwei Optikteile zu empfangen (40a, 40b; 56, 58), deren Umfang dafür vorgesehen ist.

7. Vorrichtung nach Anspruch 6 und einem der Ansprüche 4 bis 5, dadurch gekennzeichnet, daß die Prismen (18a, 18b) aus demselben genannten Material hergestellt sind.

8. Vorrichtung nach einem der Ansprüche 1 bis 7, dadurch gekennzeichnet, daß jedes Element (8a, 8b, 12a, 12b) aus einer Aufeinanderschichtung von mehreren piezoelektrischen Platten (p1, ..., pN) besteht, die so angeordnet sind, daß eine globale Zusammenziehung oder Ausdehnung des Blockes möglich ist.

9. Vorrichtung nach Anspruch 8, dadurch gekennzeichnet, daß jede Platte (p1, ..., pN) aus zwei gegenüberliegenden Seiten besteht, die elektrisch leitfähig gemacht wurden, daß die Aufeinanderschichtung der Platten in der Weise erfolgte, daß zwei benachbarte Platten dieser Aufeinanderschichtung eine gemeinsame Seite haben, daß die gemeinsame Seite von zwei aneinandergrenzenden Platten, wobei diese Platten ein Paar bilden, elektrisch mit der gemeinsamen Seite eines angrenzenden Plattenpaars verbunden ist, und daß die jeweiligen Polarisationen der Platten wechselnd sind.

10. Verfahren zur Herstellung einer Vorrichtung zur Ausrichtung von Optikteilen, das die folgenden aufeinanderfolgenden Stufen umfaßt:
   - man stellt einen ersten (B1) und einen zweiten (B2) piezoelektrischen Block her, der jeweils zwei Endseiten hat, wobei jeder Block eine Symmetrieebene hat, die diesen Block in zwei identische Teile (8a, 8b; 12a, 12b) teilt und dieser Block aus einer Aufeinanderschichtung von mehreren pizoelektrischen Platten (P1, ..., pN) in einer bestimmten Richtung, parallel zur Symmetrieebene, besteht, wobei bei dieser Aufeinanderschichtung zwei Endseiten sichtbar werden und die Platten so angeordnet sind, daß eine globale Zusammenziehung oder Ausdehnung des Blockes und der identischen Teile, wenn diese getrennt werden, in in entsprechender Richtung möglich ist;
   - man befestigt ein erstes starres Element (B3) an einer der Endseiten des ersten piezoelektrischen Blocks (B1) und zwar so, daß die Symmetrieebene des letzteren mit der Symmetrieebene des ersten starren Elements vereinigt wird;
   - man befestigt ein zweites starres Element (B4) an die andere Endseite dieses ersten Blockes (B1) und zwar so, daß die Symmetrieebene dieses letzteren mit der Symmetrieebene des zweiten starren Elements vereinigt wird;
   - man befestigt eine der Endseiten des zweiten pizoelektrischen Blockes (B2) in der Weise an das zweite starre Element (B4), daß die jeweiligen Richtungen (X, Y) der piezoelektrischen Blöcke (B1, B2) senkrecht sind und die Symmetrieebenen des zweiten piezoelektrischen Blocks und des zweiten starren Elements vereinigt sind;
   - man befestigt einen Empfangsträger (B5), der in der Lage ist, die Optikteile zu empfangen eine Symmetrieebene erlaubt, an der anderen Endseite des zweiten piezoelektrischen Blocks (B2) und zwar so, daß die Symmetrieebene des letzteren mit der Symmetrieebene des Empfangsträgers vereinigt wird;
   - man befestigt das erste starre Element (B3) in der Form auf einem Träger (15), daß das zweite starre Element (B4) an diesem Träger (15) ruht, und
   - man nimmt entsprechend den vereinigten Symmetrieebenen durch Anschneiden des Trägers (15) einen Schnitt des Elementes vor, das die beiden piezoelektrischen Blöcke (B1, B2), die beiden starren Elemente (B3, B4) und den Empfangsträger umfassen.

11. Verfahren nach Anspruch 10, dadurch gekennzeichnet, daß jeder piezoelektrische Block (B1, B2) durch Aufeinanderschichten von identischen piezolektrischen Platten (p1, ..., pN) entsteht, die zwei gegenüberliegende Seiten umfassen, die elektrisch leitfähig gemacht wurden und eine erste (S1) und eine zweite (S2) zueinander sowie zu den gegenüberliegenden Seiten senkrecht stehende Symmetrieebene haben, und zwar durch Wechseln der jeweiligen Polarisationen der Platten und Einführen von:
   - von zwei dünnen und fortlaufenden, etwa parallelen Elektrizitätsleitern (C1, C2) von beiden Seiten der ersten Symmetrieebene (S1) zwischen die Platten der Reihe 2n und 2n + 1 der Aufeinanderschichtung, wobei n eine ganze Zahl ist und mindestens 1 entspricht, und zwar in der Weise, daß diese Leiter von der zweiten Symmetrieebene (S2) aus gesehen etwa um eine Halbperiode voneinander versetzte Impulse bilden, und

- von ferner zwei dünnen und fortlaufenden, etwa parallelen Elektrizitätsleitern (C3, C4) von beiden Seiten der zweiten Symmetrieebene (S2) zwischen die Platten der Reihe 2n-1 und 2n der Aufeinanderschichtung und zwar in der Weise, daß von der ersten Symmetrieebene (S1) aus gesehen diese Leiter ungefähr um eine Halbperiode von einander versetzte Impulse bilden.

12. Verfahren nach Anspruch 10, dadurch gekennzeichnet, daß jeder piezoelektrische Block (B1, B2) durch Aufeinanderschichten von identischen piezoelektrischen Platten (p1, ..., pN) entsteht, die zwei gegenüberliegende Seiten haben, die elektrisch leitfähig gemacht wurden und eine erste (S1) und eine zweite (S2) Symmetrieebene haben, die senkrecht zueinander sowie zu den gegenüberliegenden Seiten stehen, durch Wechseln der jeweiligen Polarisationen der Platten und Einführen von:

- zwei dünnen und fortlaufenden, ungefähr parallelen Elektrizitätsleitern (D1, D2) von beiden Seiten der ersten Symmetrieebene (S1) zwischen die Platten der Reihe 2n und 2n+1 in der Aufeinanderschichtung, was den einen der beiden Leiter betrifft, und der Reihe 2n-1 und 2n, was den anderen Leiter betrifft, wobei n eine ganze Zahl von mindestens 1 ist, und zwar in der Weise, daß von der zweiten Symmetrieebene (S2) aus gesehen diese Leiter (D1, D2) ungefähr um eine 1/4 Periode voneinander versetzte Impulse bilden, und

- zwei dünnen und fortlaufenden, ungefähr parallelen Elektrizitätsleitern (D3, D4) von beiden Seiten der zweiten Symmetrieebene (S2) zwischen die Platten der Reihe 2n und 2n-1 der Aufeinanderschichtung, was den einen Leiter betrifft, und der Reihe 2n-1 und 2n bei dem anderen Leiter, und zwar in der Weise, daß entsprechend der ersten Symmetrieebene (S1) diese Leiter (D3, D4) ungefähr um 1/4 Periode voneinander versetzte Impulse ergeben.

13. Verfahren zum Verbinden von zwei Lichtleitfasern (4a, 4b), wobei bei diesem Verfahren eine Vorrichtung zur gegenseitigen Ausrichtung von zwei Optikteilen eingesetzt wird, die zwei einstellbare, jeweils mit zwei Prismen ausgestattete Einheiten umfaßt, ein Verfahren, demzufolge:

- man die Fasern in der Weise in den Prismen (18a, 18b) anordnet, daß sich die Endseiten dieser Fasern ungefähr gegenüberliegen,

- man in die andere Endseite einer (4a) der beiden Fasern Licht hineinschickt und man einen Teil dieses Lichtes am anderen Ende der anderen Faser (4b) registriert und entsprechende Einstellungen vornimmt, damit die Menge an am anderen Ende der anderen Faser registrierten Lichtes so groß wie möglich ist, wobei man anschließend

- die Endseiten der Fasern aneinander befestigt, ein Verfahren, das dadurch gekennzeichnet ist, das die Vorrichtung einem der Ansprüche 6 bis 7 entspricht und daß es sich bei den Einstellungen um entsprechende Zusammenziehungen und Ausdehnungen der ersten und der zweiten Blöcke (8a, 8b, 12a, 12b) handelt.

14. Verfahren nach Anspruch 13, dadurch gekennzeichnet, daß bei jeder Faser (4a, 4b) vor ihrer Anordnung in dem entsprechenden Prisma die Schutzumhüllung auf dem sich von der genannten Endseite ab erstreckenden Abschnitt entfernt wird, daß dieser Teil in einer zylindrischen Rotationsendtülle (40a, 40b) befestigt wird, daß die verbundenen Endseiten der Endtülle und der Faser anschließend senkrecht zur Achse der Endtülle poliert werden und daß diese Endtüllen durch einen lichtpolymerisierbaren Kleber miteinander verbunden werden, wobei dieses Klebemittel polymersisiert wird, nachdem die Endtüllen in den Prismen angeordnet wurden und die Menge des am anderen Ende der anderen Faser registrierten Lichtes auf ein Maximum eingestellt wurde.

15. Verfahren zum Verbinden einer Lichtleitfaser (58) mit einer Photoemissionsdiode (56) mit einer photoemissiven Oberfläche (62), wobei bei diesem Verfahren eine Vorrichtung zur Anordnung von zwei Optikteilen verwandt wird, die zwei einstellbare, jeweils mit zwei Prismen ausgestattete Einheiten umfaßt, ein Verfahren, demzufolge:

- man die Faser und die Diode jeweils in den Prismen (18b, 18a) in der Weise anordnet, daß sich die photoemissive Oberfläche der Diode einer der Endseiten der Faser ungefähr gegenüberliegend befindet,

- man von der Diode Licht aussendet und einen Teil dieses Lichtes am anderen Ende der Faser registriert und die Einstellung in der Weise erfolgt, daß eine größtmögliche Menge an Licht am anderen Ende der Faser registriert wird, wobei man anschließend

- die Faser und die Photoemissionsdiode aneinander befestigt, ein Verfahren, das dadurch gekennzeichnet ist, daß die Vorrichtung einem der Ansprüche 6 bis 7 entspricht und daß es sich bei den Einstellungen um entsprechende Zusammenziehungen und Ausdehnungen der ersten und der zweiten Blöcke (8a, 8b, 12a, 12b) handelt.

16. Verfahren zum Verbinden von zwei Lichtleitfasern (70a, 70b), um einen optischen Koppler in X-Form zu erhalten, wobei bei diesem Verfahren eine Vorrichtung zur gegenseitigen Ausrichtung von zwei Optikteilen angewandt wird, die zwei einstellbare Einheiten umfaßt, die jeweils mit zwei Empfangsträgern ausgestattet sind, ein Verfahren, demzufolge:

- man zwei identische Platten (72a, 72b) herstellt, wobei der äußere Rand jeder Platte mindestens einen gekrümmten Abschnitt hat, dessen Wölbung zum äußeren Rand der Platte geht und der mit einer Rille versehen ist, die sich längs dieses Abschnitts erstreckt,
- man die jeweiligen Abschnitte der Fasern jeweils in den Rillen befestigt,
- man einen Innenteil (76) jeder Faser in der Mitte des in der entsprechenden Rille befindlichen genannten Faserabschnitts zum Vorschein kommen läßt,
- man die Platten jeweils auf den beiden Empfangsträgern (78a, 78b) anordnet,
- man die Platten dort so hält, daß die Innenteile miteinander in Berührung kommen und daß sich die Faserabschnitte ungefähr in einer Ebene parallel zur Richtung X und in senkrechter Richtung (Z) zu den Richtungen X und Y befinden,
- man Licht in ein Ende jeder der beiden Fasern hineinschickt, einen Teil des genannten Lichtes am anderen Ende jeder der beiden Fasern registriert, wobei man die Einstellungen in der Weise wählt, daß die jeweils am anderen Ende registrierte Lichtmenge so groß wie möglich ist, wonach
- die Faserabschnitte aneinander befestigt werden, ein Verfahren, das dadurch gekennzeichnet ist, daß die Vorrichtung einem der Ansprüche 1 bis 5 entspricht und daß es sich bei den Einstellungen um entsprechende Zusammenziehungen und Ausdehnungen der ersten und der zweiten Blöcke (8a, 8b, 12a, 12b) handelt.

FIG. 1

FIG. 7

FIG. 2

FIG. 3

FIG. 4

FIG. 5

FIG. 6

FIG. 8

FIG 9

EP 0 308 281 B1